# EUROPEAN PATENT APPLICATION

(11) **EP 2 164 151 A2**
(43) Date of publication of application: **17.03.2010**
(21) Application number: 09158914.3
(22) Date of filing: 28.04.2009
(51) Int. Cl.: H02J 7/00

(54) **Portable power and control pack**

(30) Priority: 11.09.2008 TW 97216423 U
(71) Applicant: Forsen Motor Corporation, Tucheng City 236 T'ai pei (TW)
(72) Inventor: Chen, Kentai, 103, Taipei (TW)
(74) Representative: Viering, Jentschura & Partner

(57) **Abstract**

A portable power and control pack includes an enclosure(2) having a top surface and a lateral surface formed respectively with openings(210,220). The enclosure has a frontal surface provided with at least one connecting element(23/25). An electric power device(26) and a controller(27) electrically connected thereto are disposed in the enclosure. The electric power device has a lateral surface provided with plural connecters(262,263,264) corresponding in position to one of the openings of the enclosure. The portable power and control pack can be mounted conveniently at an appropriate location on a human-powered bicycle via the at least one connecting element on the enclosure, allowing the connectors of the electric power device to be connected via transmission lines(28) to an axle motor(331) installed on a wheel(33) of the bicycle(3). Thus, the human-powered bicycle is easily transformed into an electrically driven bicycle.

## Description

### BACKGROUND OF THE INVENTION

### 1. Technical Field

The present invention relates to electric power packs. More particularly, the present invention relates to a portable control pack complete with an electric power device and easily mountable on a human-powered bicycle with an axle motor so as to convert the bicycle into an electrically driven bicycle.

### 2. Description of Related Art

Bicycles were invented in the first place as a means of transportation and have thrived again in recent years due to the gradual depletion of energy reserve and global warming. Although not limited by gender or age, riding a bicycle can nevertheless be physically demanding, especially when it comes to coping with different road conditions. For example, riding uphill is undoubtedly an arduous task for seniors or those who do not exercise regularly. In order to solve this problem, electrically driven bicycles that require no pedaling have emerged. Nowadays, a typical electric bicycle has an electric power device fixedly mounted on the bicycle frame and electrically connected to an axle motor of the wheels so as to drive the bicycle forward. When it is desired to drive the bicycle by pedaling, power transmission from the electric power device can be cut off. However, the aforesaid electric bicycle has the following disadvantages. First of all, the heavy and bulky batteries and electric power device are immovably attached to the bicycle frame and thus become an unnecessary burden to the cyclist during the human-powered mode. Secondly, since the electric power device is integrally formed with the bicycle frame, recharging cannot be done without moving the entire bicycle to a charging power source and is thus extremely inconvenient. Besides, by making the electric power device an inseparable part of the bicycle, the selling price, as well as the risk of theft, of the bicycle is increased, only to cause more trouble to consumers and bicycle owners.

### BRIEF SUMMARY OF THE INVENTION

Therefore, it is an objective of the present invention to solve the disadvantages of the aforesaid conventional electric bicycle that arise from making the electric power device an inseparable part of the bicycle and include, among others, increased overall weight, charging inconvenience, and high risk of theft.

To achieve this and other objectives, the present invention provides a portable power and control pack. The power and control pack includes an enclosure in which an electric power device and a controller electrically connected thereto are disposed. The enclosure has a top surface and a lateral surface formed respectively with openings. In addition, the enclosure has a frontal surface provided with at least one connecting element. The electric power device has a lateral surface provided with a plurality of connectors corresponding in position to one of the openings of the enclosure.

The power and control pack disclosed herein can be conveniently mounted, by means of the at least one connecting element on the enclosure, on a bicycle having an axle motor, thus allowing the connectors of the electric power device to be connected to the axle motor of the bicycle via transmission lines. In doing so, an ordinary human-powered bicycle that is driven by pedaling is readily transformed into an electrically driven bicycle. When it is desired not to drive the bicycle electrically, the power and control pack can be easily detached from the bicycle to reduce the overall weight of the bicycle so that no extra burden will be imposed on pedaling. Also, the power and control pack can be removed from the bicycle when the electric power device needs charging or when the cyclist has to leave the bicycle. Consequently, charging is made easy, and the risk of the bicycle's being stolen is lowered. In short, the present invention is capable of overcoming all the above-mentioned disadvantages of the conventional electric bicycle.

According to the disclosed portable power and control pack, each of the openings of the enclosure includes a flippable cover plate that is connected to the corresponding opening by a zipper.

According to the disclosed portable power and control pack, the at least one connecting element provided on the frontal surface of the enclosure may include a fastener, a hook, or a combination thereof, wherein the fastener and the hook are provided at arbitrary locations on the same side or different sides of the enclosure.

According to the disclosed portable power and control pack, the plurality of connecters on the lateral surface of the electric power device include a sensing connector, a charging connector, and an electric power output connector. Optionally, the plurality of connectors may include an LED display connector, a pedal counter connector, or a brake detection connector.

According to the disclosed portable power and control pack, the enclosure may be further provided with a strap connected to two opposite lateral surfaces of the enclosure. Furthermore, the enclosure is preferably made of a waterproof material so as to adapt to the outdoor environment where bicycles are generally used.

In addition to bicycles, the disclosed portable power and control pack is equally applicable to handheld mowing machines, motor-powered sampans, or other devices to be driven by low-capacity electric power supplies.

### BRIEF DESCRIPTION OF THE SEVERAL VIEWS OF THE DRAWINGS

The invention as well as a preferred mode of use, further objectives, and structural features thereof will be best understood by referring to the following detailed description of illustrative embodiments in conjunction with the accompanying drawings, wherein:
FIG. 1 is a perspective view of a portable power and control pack according to the present invention;
FIG. 2 is another perspective view of the portable power and control pack according to the present invention, exposing an electric power device and a controller inside the pack, and plural connectors;
FIGS. 3 and 4 are schematic drawings showing the portable power and control pack of the present invention applied to a bicycle, wherein the portable power and control pack is depicted in FIG. 3 as mounted on a handlebar of the bicycle and connected via a transmission line to an axle motor, and in FIG. 4 as mounted on a rear rack of the bicycle and connected via a transmission line to the axle motor; and
FIG. 5 is a block diagram of the electric power device and the controller electrically connected thereto that are disposed in the portable power and control pack according to the present invention.

### DETAILED DESCRIPTION OF THE INVENTION

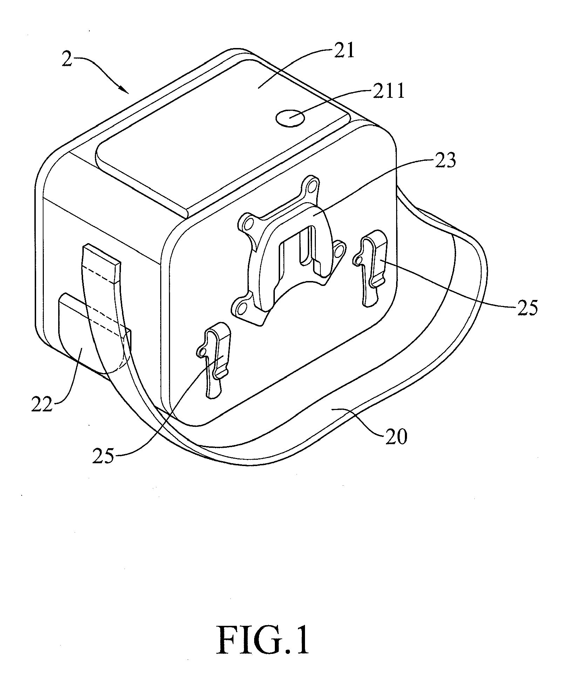

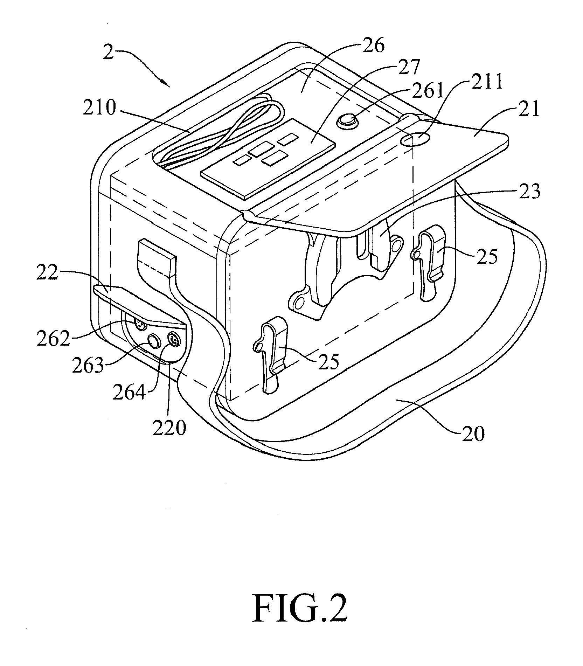

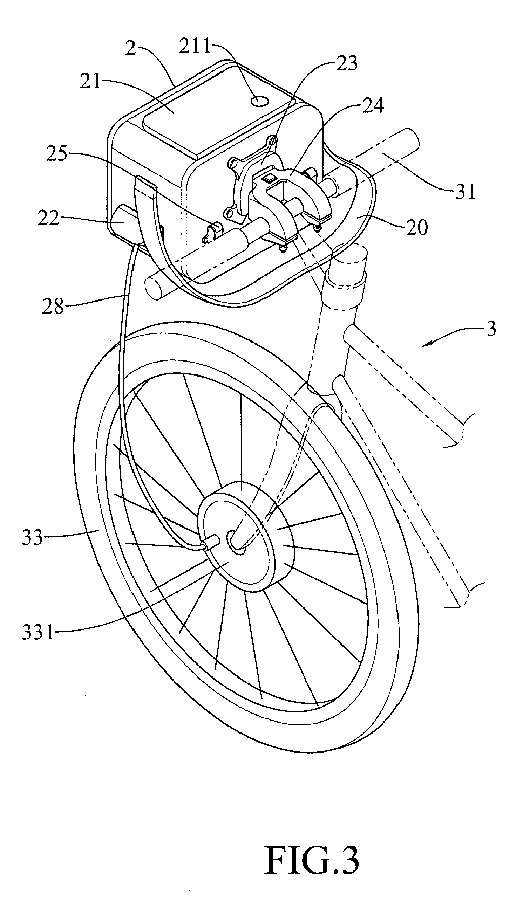

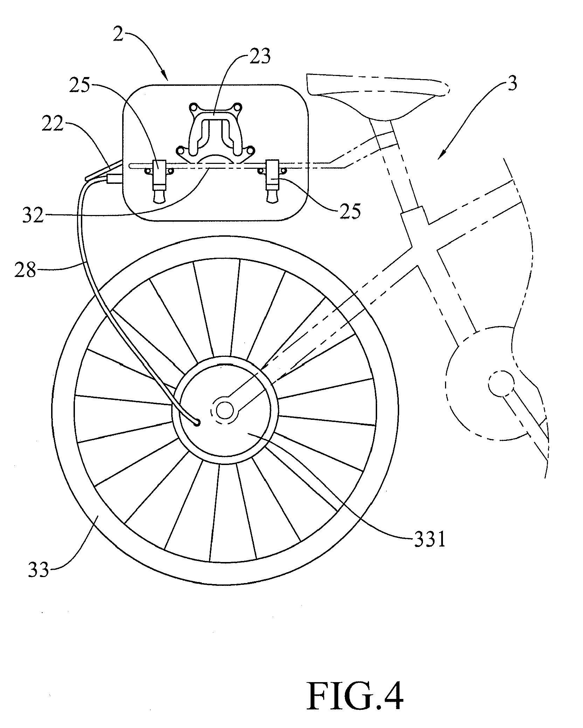

Referring to FIG. 1 and FIG. 2 for a preferred embodiment of a portable power and control pack of the present invention, the portable power and control pack includes an enclosure 2 preferably made of a waterproof material so as to cope with the outdoor environment where bicycles are generally used. The enclosure 2 is provided with a strap 20 connected to two opposite lateral surfaces of the enclosure 2. The enclosure 2 has a top surface and a lateral surface provided with flippable cover plates 21 and 22, respectively. When the cover plates 21 and 22 are flipped open, two openings 210 and 220 are formed on the enclosure 2. The cover plates 21 and 22 can be connected to the openings 210 and 220 by elements such as zippers or, as shown in the present embodiment, by being affixed near the openings 210 and 220 such that the cover plates 21 and 22 are only allowed to be flipped open but not completely removed. The cover plate 21 in the present embodiment is formed with a window 211 which is hollow or covered with a transparent plate. A fastener 23 and a pair of bilaterally arranged hooks 25 are provided on a frontal surface of the enclosure 2. The fastener 23 is configured for fastening with a fastening element 24 on a handlebar 31 of a bicycle 3 (see FIG. 3) while the hooks 25 are configured for hooking on a rear rack 32 of the bicycle 3 (see FIG. 4). The fastener 23 and the hooks 25 described above are preferred embodiments for illustrative purposes only and may vary in structure, quantity, and location so as to suit the portions of a bicycle to which they are applied and the corresponding fastening elements.

An electric power device 26 and a controller 27 electrically connected thereto are disposed in the enclosure 2. The controller 27 can be assembled to the electric power device 26 to form one piece. Alternatively, as shown in the present embodiment, the controller 27 is mounted on a top of the electric power device 26 and corresponds in position to the upper opening 210 of the enclosure 2. A power switch 261 of the electric power device 26 is also exposed in the opening 210 so that, when the opening 210 is covered by the cover plate 21, the power switch 261 corresponds in position exactly to the window 211 of the cover plate 21, thus allowing the power switch 261 to be easily viewed and operated. The electric power device 26 has a lateral surface provided with a plurality of connectors, which in the present embodiment at least include a sensing connector 262, a charging connector 263, and an electric power output connector 264. These connectors correspond in position to the opening 220 of the enclosure 2 so as to be easily connected by transmission lines to a corresponding device (such as an axle motor) of a bicycle after the cover plate 22 is flipped open.

Referring to FIG.3 and FIG. 4 for schematic drawings showing the portable power and control pack of the present invention applied to a bicycle 3. As shown in FIG. 3, wherein a wheel 33 having an axle motor 331 is installed in the bicycle 3 as the front wheel, the power and control pack is fastened to a fastening element 24 on a handlebar 31 of the bicycle 3 by means of the fastener 23 on the frontal surface of the enclosure 2. Then, the power and control pack is electrically connected to the axle motor 331 by a transmission line 28 so that the axle motor 331 is driven by electric power coming from the power and control pack. Thus, the bicycle 3 is transformed from one purely powered by pedaling into one driven by electricity. By the same token, when the wheel 33 having the axle motor 331 is installed as the rear wheel of the bicycle 3, as shown in FIG. 4, the power and control pack is hooked on a periphery of a rear rack 32 of the bicycle 3 by means of the pair of hooks 25, before the power and control pack is electrically connected by the transmission line 28 to the axle motor 331.

It should be noted that the power and control pack can be mounted on the handlebar or the rear rack of a bicycle regardless of whether the axle motor is installed on the front wheel or the rear wheel of the bicycle because the power and control pack can in either case be connected to the axle motor by a transmission line of sufficient length. For example, a transmission line longer than required in the case described in the previous paragraph can be used to electrically connect the power and control pack mounted on the handlebar 31 of the bicycle 3 to the axle motor 331 installed at the rear wheel of the bicycle 3, or to electrically connect the power and control pack mounted on the rear rack 32 of the bicycle 3 to the axle motor 331 installed at the front wheel of the bicycle 3. Besides, the axle motor 331 can be installed on any appropriate part of the bicycle 3 other than the handlebar 31 and the rear rack 32.

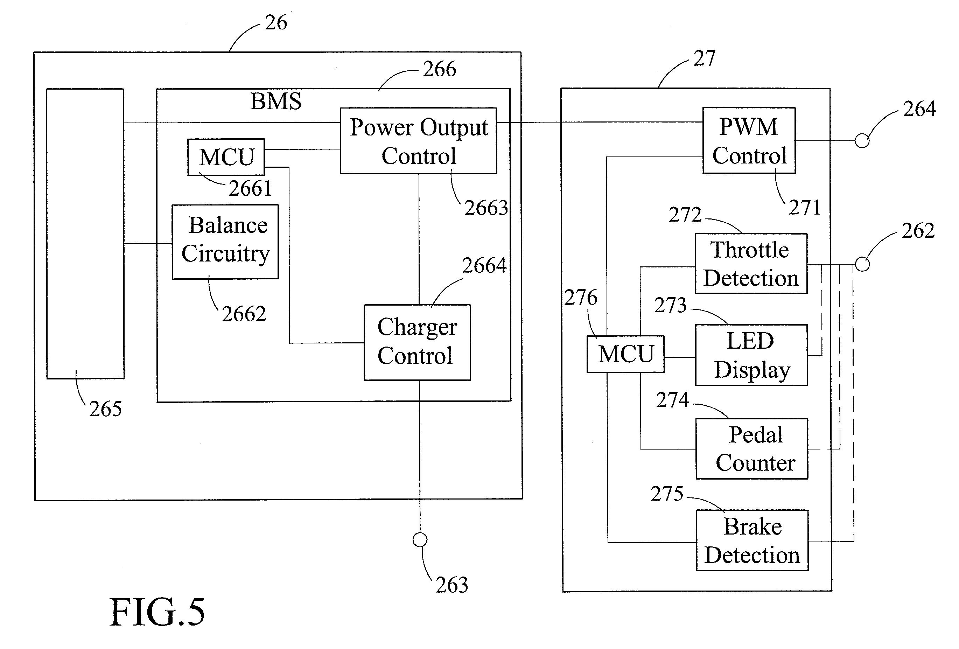

FIG. 5 is a block diagram of the electric power device 26 and the controller 27 electrically connected thereto that are disposed in the portable power and control pack according to the present invention. In order to drive a bicycle, the electric power device 26 includes a battery 265 (such as a lithium battery used in the present embodiment) and a battery management system (BMS) 266. The battery management system 266 includes a micro control unit (MCU) 2661, a balance circuitry 2662, a power output control unit 2663, and a charger control unit 2664. The controller 27 in the present embodiment includes a PWM control unit 271 and a throttle detection unit 272. In the electric power device 26 described above, the micro control unit 2661 of the battery management system 266 controls the balance circuitry 2662 and the power output control unit 2663 so as to transmit electric power through the PWM control unit 271 of the controller 27 to the electric power output connector 264, from which the electric power is then outputted to the axle motor of a bicycle via a transmission line. On the other hand, the battery 265 is charged via the charging connector 263 under the control of the charger control unit 2664. As to the controller 27, the throttle detection unit 272 is connected to the sensing connector 262 and can be further connected to a bicycle by a transmission line so as to detect the electric power demand of the bicycle (such as by detecting a rider's turning a throttle valve on the handlebar 31 of the bicycle) and timely output sufficient electric power accordingly.

Referring to the electric power device 26 and the controller 27 in FIG. 5, the controller 27 is provided at least with the PWM control unit 271 and the throttle detection unit 272 to satisfy the basic requirement of driving a bicycle. However, as shown in FIG. 5, the controller 27 may also include an LED display unit 273, a pedal counter unit 274, and a brake detection unit 275. The LED display unit 273 is configured for displaying information such as the level of stored electric power and operation modes. The pedal counter unit 274 is configured for determining, according to the number of pedal cycles made or the pedaling force applied, whether or not a rider intends to increase the riding speed, so that extra electric power can outputted accordingly. The brake detection unit 275 automatically cuts off the supply of electric power and thus lowers the speed of the bicycle when it is detected that a brake is actuated. The LED display unit 273, the pedal counter unit 274, and the brake detection unit 275 are preferred embodiments provided for illustrative purposes only. One or all of the units 273, 274, and 275 can be omitted as needed. Besides, the units 273, 274, and 275 can be connected integratedly to the sensing connector 262 so as to output therefrom (as shown by the dashed lines in FIG. 5). Alternatively, a corresponding LED display connector, pedal counter connector, or brake detection connector can be added. The aforesaid control units or detection units of the controller 27 are managed by a micro control unit 276.

The present invention is described herein by reference to preferred embodiments and it is understood that the embodiments are not intended to limit the scope of the present invention, which is defined only by the appended claims. Moreover, as changes or modifications based on the technical features disclosed herein are readily conceivable by a person of ordinary skill in the art, all such changes or modifications should be encompassed by the appended claims.

### List of reference numbers

- 2: enclosure
- 20: strap
- 21: cover plate
- 210: opening
- 211: window
- 22: cover plate
- 220: opening
- 23: fastener
- 24: fastening element
- 25: hook
- 26: electric power device
- 261: power switch
- 262: sensing connector
- 263: charging connector
- 264: electric power output connector
- 265: battery
- 266: battery management system (BMS)
- 2661: micro control unit (MCU)
- 2662: balance circuitry
- 2663: power output control unit
- 2664: charger control unit
- 27: controller
- 271: PWM control unit
- 272: throttle detection unit
- 273: LED display unit
- 274: pedal counter unit
- 275: brake detection unit
- 276: micro control unit
- 28: transmission line
- 3: bicycle
- 31: handlebar
- 32: rear rack
- 33: wheel
- 331: axle motor

## Claims

1. A portable power and control pack, comprising:
an enclosure(2) having two surfaces each formed with an opening(210/220), and another surface provided with at least a connecting element(23/25);
an electric power device(26) disposed inside the enclosure and having two surfaces provided with a power switch(261) and plural connectors(262,263,264), respectively, wherein the power switch and the plural connectors correspond in position to the two openings of the enclosure, respectively; and
a controller(27) disposed inside the enclosure and electrically connected with the electric power device.

2. The portable power and control pack of Claim 1, wherein each said opening of the enclosure comprises a flippable cover plate(21/22).

3. The portable power and control pack of Claim 2, wherein each said cover plate of the enclosure is connected to a corresponding one of the openings by a zipper.

4. The portable power and control pack of Claim 2, wherein one of the cover plates has a window(211) through which the power switch of the electric power device can be viewed.

5. The portable power and control pack of Claim 1, wherein the at least a connecting element of the enclosure is one of a fastener(23) and a hook(25).

6. The portable power and control pack of Claim 1, wherein the enclosure further comprises a strap(20) coupled to two opposite surfaces of the enclosure.

7. The portable power and control pack of Claim 1, wherein the enclosure is made of a waterproof material.

8. The portable power and control pack of Claim 1, wherein the plural connectors of the electric power device at least include a sensing connector(262), a charging connector(263), and an electric power output connector(264).

9. The portable power and control pack of Claim 8, further comprising an LED display connector, a pedal counter connector, or a brake detection connector.
